# EUROPÄISCHE PATENTSCHRIFT

(11) **EP 0 737 157 B1**
(45) Veröffentlichungstag und Bekanntmachung des Hinweises auf die Patenterteilung: **27.05.1998**
(21) Anmeldenummer: 95904516.2
(22) Anmeldetag: 21.12.1994
(51) Int. Cl.: B65D 73/02, F16B 27/00

(54) **VERPACKUNG FÜR STABFÖRMIGE TEILE**
PACKAGE FOR ELONGATED PARTS
EMBALLAGE POUR PIECES DE FORME ALLONGEE

(30) Priorität: 27.12.1993 DE 4344679; 13.07.1994 DE 4424750
(43) Veröffentlichungstag der Anmeldung: 16.10.1996
(73) Patentinhaber: SFS Industrie Holding AG, 9435 Heerbrugg (CH)
(72) Erfinder: ÖSTERLE, Helmut, A-6800 Feldkirch (AT); GASSER, Daniel, CH-9444 Diepoldsau (CH); HASLER, Guido, CH-9437 Marbach (CH); SAHLI, Richard, CH-9443 Widnau (CH); SEIFERT, Walter, CH-9470 Buchs (CH); KÖPPEL, Norbert, CH-9444 Diepoldsau (CH); STEFFEN, Markus, CH-9472 Grabs (CH)
(74) Vertreter: Ludescher, Hans
(86) Internationale Anmeldenummer: EP9404256
(87) Internationale Veröffentlichungsnummer: WO9518050

(56) Entgegenhaltungen:
- FR-A- 2 216 805
- FR-A- 2 682 360
- US-A- 4 606 455
- PATENT ABSTRACTS OF JAPAN vol. 13, no. 545 (M-902) (3893) 6. Dezember 1989 & JP,A,01 224 508 (CANON INC.) 7. September 1989

## Beschreibung

Die Erfindung betrifft eine Verpackung für stabförmige Teile, z.B. Schrauben, Bolzen, Nägel, Stifte oder dergleichen, in Form eines streifenförmigen Trägerelementes, in welchem die Teile parallel zueinander und in einer Reihe ausgerichtet gehalten werden können, wobei das Trägerelement aus einem Aufnahmestreifen mit einer Vielzahl von Aufnahmeöffnungen, Einbuchtungen, Schlitzen, Noppen oder dergleichen zur parallel zueinander ausgerichteten Halterung der stabförmigen Teile und aus einem Deckstreifen besteht, welcher den dem Aufnahmestreifen gegenüberliegenden Bereich der stabförmigen Teile auf einem Teil ihrer Länge abdeckt.

Es sind bereits eine Reihe von Magazinierstreifen für bolzenförmige Befestigungselemente bekannt geworden (z.B. DE-C-29 07 486, EP-B-320 186, DE-U-76 39 013). Bei allen diesen Magazinier- oder Schraubenstreifen geht es darum, Befestiger parallel zueinander und in einer Reihe ausgerichtet zu halten und in dieser Form einem Einschraubgerät zuzuführen. Im Einschraubgerät wird der Befestiger dann durch Eindrehen in den Untergrund und durch zumindest teilweises Zerstören des Magazinierstreifens aus diesem herausgelöst. Solche Magazinierstreifen bilden daher nicht nur die Verpackungselemente, sondern werden auch als Halterung der Schrauben bis unmittelbar vor die Verarbeitung in einem Einschraubgerät benötigt. Diese Schrauben werden im Magazinierstreifen auch entsprechend stabil gehalten und können auch nicht ohne weiteres quer zu diesem herausgelöst werden, es sei denn, daß entsprechender Kraftaufwand ausgeübt wird.

Bei einem bekannten Magazinierstreifen (FR-A-2 682 360), auf welchen stabförmige Teile aufgelegt sind, welche durch einen Deckstreifen auf einem Bereich von mehr als 180° umschlossen werden, wird der Deckstreifen bei der Magazinierung teilweise mit dem Trägerstreifen verschmolzen. Auch z.B. an den stabförmigen Teilen vorgesehene Gewindeteile greifen entsprechend in den Trägerstreifen und in den Deckstreifen ein. Somit erfolgt eine feste Verbindung zwischen dem Deckstreifen und dem Trägerstreifen, so daß ein einzelnes Entfernen der stabförmigen Teile nur durch Zerstören des Magazinierstreifens im Bereich dieses stabförmigen Teiles möglich ist.

Die vorliegende Erfindung hat sich zur Aufgabe gestellt, eine Verpackung der eingangs genannten Art zu schaffen, welche nur als Mittel zum geordneten Transport und zum Einführen in ein entsprechendes Magazin dient, jedoch in einfacher Weise von den gehaltenen, stabförmigen Teilen entfernbar ist.

Erfindungsgemäß gelingt dies dadurch, daß der Deckstreifen mit dem Aufnahmestreifen in einer Weise verbunden ist, welche das gesamthafte Abreißen, Abtrennen bzw. Ablösen des Deckstreifens vom Aufnahmestreifen ermöglicht.

Es ist also in konstruktiv einfacher Weise eine echte Verpackung für stabförmige Teile geschaffen worden, welche nach dem Einbringen der stabförmigen Teile in ein entsprechendes Magazin bzw. eine entsprechende Halterung entfernt werden kann, ohne daß dabei Abfallteile dieser Verpackung in ein Verarbeitungsgerät oder dergleichen fallen können.

In einer solchen Verpackung können die stabförmigen Teile für den Transportabschnitt in einfacher Weise geordnet gehalten werden. Auch ein geordnetes Einführen in ein entsprechendes Magazin bzw. in eine Verarbeitungseinrichtung ist gewährleistet, da die stabförmigen Teile eben nach wie vor entsprechend ausgerichtet gehalten werden können. Es ist also nicht wie bei einer Verpackung in üblichen Schachteln eine Einzelzuführung bzw. ein einzelnes Einfädeln der stabförmigen Teile in eine Verarbeitungseinrichtung notwendig. Wenn sich die stabförmigen Teile in einem Magazin bzw. in einer Verarbeitungseinrichtung in der richtigen Stellung befinden, kann gemäß der Erfindung der Deckstreifen abgerissen, abgetrennt bzw. abgelöst werden, so daß auch der Aufnahmestreifen an der gegenüberliegenden Seite einfach abgenommen werden kann. Sobald die stabförmigen Teile in einer Verarbeitungseinrichtung bzw. in einem Magazin in ihrer Endposition liegen, bedarf es keiner Verpackung mehr und diese kann sehr einfach entfernt werden.

Da eine solche Verpackung eben nur im Sinne einer Verpackung und nicht als Zuführmittel für die stabförmigen Teile direkt in die Verarbeitungseinrichtung hinein benötigt wird, ist eine Gestaltung der Verpackung mit den verschiedensten Materialien möglich, wobei auch eine in sich steife Verpackung vorteilhaft ist. Daher ist es auch möglich, für eine solche Verpackung aus Umweltschutzgründen spezielles, wiederverwertbares Material einzusetzen.

Weiters wird vorgeschlagen, daß der Aufnahmestreifen im wesentlichen U-förmig ausgebildet ist, wobei in den mit Abstand parallel zueinander verlaufenden, von einem Rückenteil abstehenden Stegen Aufnahmeöffnungen bzw. Einbuchtungen ausgebildet sind. Die eingesetzten stabförmigen Teile werden also von zwei mit entsprechendem Abstand voneinander liegenden Stegen parallel zueinander ausgerichtet gehalten, wobei es sehr einfach ist, die stabförmigen Teile in die Aufnahmeöffnungen einzulegen bzw. in axialer Richtung einzuschieben. Von besonderem Vorteil ist dabei, daß die Aufnahmeöffnungen bzw. Einbuchtungen zum freien Randbereich der Stege hin erweitert oder als in Draufsicht U-förmige Öffnungen ausgebildet sind. Dadurch kann auch der Aufnahmestreifen nach dem Entfernen des Deckstreifens ohne eine Behinderung von der gegenüberliegenden Seite der stabförmigen Teile einfach weggekippt bzw. weggezogen werden, da die eingesetzten stabförmigen Teile keinerlei Widerstand ausüben. Die Aufnahmeöffnungen haben also gegen den Rand der Stege hin keinerlei Einengungen, so daß der Aufnahmestreifen nach dem Entfernen des Deckstreifens praktisch von selbst wegfallen könnte. Bei einer vorteilhaften konstruktiven Gestaltung wird vorgesehen, daß der Deckstreifen mit seinen Längsrändern an den freien Randbereich der Stege anschließt und den einseitigen Verschluß der Aufnahmeöffnungen bzw. Einbuchtungen bildet. Durch den Deckstreifen wird somit jede Aufnahmeöffnung zu einer umfangsgeschlossenen Öffnung, so daß die stabförmigen Teile sicher gehalten werden. Sobald der Deckstreifen dann aber abgerissen bzw. abgetrennt oder abgelöst wird, liegen die stabförmigen Teile frei in den Aufnahmeöffnungen des Aufnahmestreifens, so daß der Aufnahmestreifen selbst eben leicht entfernt werden kann bzw. von selbst wegfällt.

Eine besonders vorteilhafte Ausgestaltung wird darin gesehen, daß der Deckstreifen einstükkig mit dem Aufnahmestreifen ausgebildet ist, wobei an den Stegen und/oder an den Übergangsbereichen zwischen den Stegen und dem Deckstreifen zum Abreißen des Deckstreifens geeignete Schwächungslinien bzw. Perforationslinien ausgebildet sind. Einerseits wird dadurch eine in sich stabile Verpackung für den Transport der stabförmigen Teile geschaffen, andererseits ist eine sehr einfache Möglichkeit zum Entfernen des Deckstreifens gegeben. Infolge der Schwächungs- bzw. Perforationslinien kann der Deckstreifen ohne besondere Kraftaufwendung einfach über die ganze Länge der Verpackung abgerissen werden, worauf dann der an der gegenüberliegenden Seite der stabförmigen Teile verbleibende Aufnahmestreifen entfernt werden kann bzw. selbst wegfällt.

In diesem Zusammenhang ist es besonders vorteilhaft, wenn direkt im Kantenbereich, also am Übergang zwischen Stegen und Deckstreifen eine Perforationslinie ausgebildet ist. Dadurch wird der einseitige Abschluß der Aufnahmeöffnung in den Stegen praktisch entfernt, indem eben der Deckstreifen abgerissen wird. Es liegen dann die zum freien Randbereich der Stege hin erweiterten bzw. zumindest in Draufsicht U-förmigen Öffnungen frei da, so daß ein einfaches Entfernen des Aufnahmestreifens möglich ist.

Um gerade für den Transport und die nachfolgende Zuführung der stabförmigen Teile zu einem Magazin bzw. zu einer Verarbeitungseinrichtung eine gute Halterung der stabförmigen Teile zu bewirken, ist es zweckmäßig, wenn die Aufnahmeöffnungen bzw. Einbuchtungen im Querschnitt etwas kleiner sind als der Außendurchmesser bzw. der Gewindedurchmesser der zu haltenden, stabförmigen Teile. Die stabförmigen Teile werden also praktisch form- und/ oder kraftschlüssig gehalten, so daß sie sich nicht in deren Längsachse verschieben können.

Bei einer anderen Ausführungsvariante wird vorgesehen, daß der Deckstreifen an dem, dem Aufnahmestreifen gegenüberliegenden Bereich der stabförmigen Teile diese abdeckend übergreift, im Bereich zwischen den stabförmigen Teilen am Aufnahmestreifen anliegt und mit diesem ablösbar bzw. abreißbar verbunden ist. Die einander zugewandten streifenförmigen Bereiche des Aufnahmestreifens und des Deckstreifens liegen also zwischen den stabförmigen Teilen voll aneinander an und sind in diesem Bereich so miteinander verbunden, daß der Deckstreifen ablösbar bzw. abreißbar ist. Auch bei einer solchen Ausführung ist es möglich, die stabförmigen Teile parallel zueinander und in einer Reihe ausgerichtet zu halten, wobei der Aufnahmestreifen eben trotzdem durch einfaches Ablösen oder Abreißen des Deckstreifens auch auf der gegenüberliegenden Seite sofort zur Gänze entfernt werden kann bzw. von selbst wegfällt.

Weiters ist es vorteilhaft, wenn das Trägerelement aus einem als Hohlprofil gebildeten Aufnahmestreifen mit einer Vielzahl von quer zu dessen Längserstreckung verlaufenden, zur Aufnahmeseite hin offenen Aufnahmeöffnungen, Schlitzen oder dergleichen zur parallel zueinander ausgerichteten Halterung der stabförmigen Teile und aus einem Deckstreifen besteht, welcher den nach außen hin in den Aufnahmeöffnungen freiliegenden Bereich der stabförmigen Teile abdeckt.

In diesem Zusammenhang ist es sinnvoll, wenn der Deckstreifen zwischen den stabförmigen Teilen und der Innenwandung desjenigen Abschnittes des als Hohlprofil ausgebildeten Aufnahmestreifens, welcher mit den Aufnahmeöffnungen, Schlitzen oder dergleichen ausgestattet ist, verschiebbar einsetzbar und herausziehbar ist.

Es ist also in konstruktiv einfacher Weise eine echte Verpackung für stabförmige Teile geschaffen worden, welche nach dem Einbringen der stabförmigen Teile in ein entsprechendes Magazin bzw. eine entsprechende Halterung entfernt werden kann, ohne daß dabei Abfallteile dieser Verpackung in ein Verarbeitungsgerät oder dergleichen fallen können.

In einer solchen Verpackung können die stabförmigen Teile für den Transportabschnitt in einfacher Weise geordnet gehalten werden. Auch ein geordnetes Einführen in ein entsprechendes Magazin bzw. in eine Verarbeitungseinrichtung ist gewährleistet, da die stabförmigen Teile eben nach wie vor entsprechend ausgerichtet gehalten werden können. Wenn sich die stabförmigen Teile in einem Magazin bzw. in einer Verarbeitungseinrichtung in der richtigen Stellung befinden, kann der Deckstreifen in einfacher Weise herausgezogen werden, so daß auch der Aufnahmestreifen durch die dann offenliegenden Aufnahmeöffnungen, Schlitze oder dergleichen in einfacher Weise von den stabförmigen Teilen abgenommen werden kann. Sobald die stabförmigen Teile in einer Verarbeitungseinrichtung bzw. in einem Magazin in ihrer Endposition liegen, bedarf es keiner Verpackung mehr und diese kann sehr einfach entfernt werden. Da eine solche Verpackung eben nur im Sinne einer Verpackung und nicht als Zuführmittel für die stabförmigen Teile direkt in die Verarbeitungseinrichtung hinein benötigt wird, ist eine Gestaltung der Verpackung mit den verschiedensten Materialien möglich, wobei auch eine in sich steife Verpackung vorteilhaft ist. Daher ist es ebenfalls möglich, für eine solche Verpackung aus Umweltschutzgründen spezielles, wiederverwertbares oder auf jeden Fall verrottbares Material einzusetzen.

Gemäß einer Ausführungsvariante kann auch vorgesehen werden, daß der Deckstreifen auf den zwischen den Aufnahmeöffnungen verbleibenden streifenförmigen Stegen des als Hohlprofil ausgebildeten Aufnahmestreifens ablösbar aufgeklebt ist. Es ist dann also nurmehr ein entsprechendes Hohlprofil mit den Aufnahmeöffnungen vorzusehen, wobei die Aufnahmeöffnungen nach dem Einlegen der stabförmigen Teile nach außen hin durch den als Klebstreifen ausgebildeten Deckstreifen abgedeckt werden. Auch bei einer solchen Ausgestaltung ist ein rasches Ablösen möglich.

Weiters wird vorgeschlagen, daß der als Hohlprofil ausgebildete Aufnahmestreifen im Querschnitt quadratisch, rechteckig oder trapezförmig ausgebildet und der Deckstreifen aus dünnem, flächigem Material gefertigt ist. Gerade für den Transport ist es aus Gründen des geringen Platzbedarfes sinnvoll, wenn die Abmessungen des Trägerelementes quer zur Längserstreckung desselben relativ gering sind. Innerhalb des Hohlprofiles des Aufnahmestreifens müssen an sich lediglich die einzusetzenden stabförmigen Teile und der verschiebbar einsetzbare und herausziehbare Deckstreifen Platz haben.

Für besondere Einsatzzwecke ist es aber auch möglich, daß der als Hohlprofil ausgebildete Aufnahmestreifen im Querschnitt kreis-, ellipsen- oder mehreckförmig ausgebildet und der Deckstreifen aus dünnem, flächigem Material gefertigt ist oder einen den Restquerschnitt zwischen den eingesetzten stabförmigen Teilen und der Innenwandung auf der Seite der Aufnahmeöffnungen annähernd füllenden Querschnitt aufweist. Es ist also auch bei entsprechend anderer Querschnittsgestaltung des Aufnahmestreifens eine sichere und unverlierbare Halterung der stabförmigen Teile gewährleistet, da sie in ihrer eingesetzten Lage innerhalb der Aufnahmeöffnung in exakter Ausrichtung gegen die Innenwandung des Aufnahmestreifens abgestützt werden.

Im Rahmen der Erfindung ist es auch möglich, daß der Aufnahmestreifen an zwei einander gegenüberliegenden Bereichen Aufnahmeöffnungen aufweist, wobei dann für diesen Aufnahmestreifen zwei Deckstreifen oder zwei Abschnitte von Deckstreifen vorgesehen sind, welche an ihrem einen Ende über einen Steg miteinander verbunden sind. Mit einer erfindungsgemäßen Verpackung besteht also auch die Möglichkeit, zwei Reihen von stabförmigen Teilen parallel zueinander ausgerichtet zu halten, wobei die stabförmigen Teile dann eben auf zwei verschiedenen Seiten des Aufnahmestreifens eingesetzt bzw. herausgenommen werden können. Mit einer solchen Ausbildung kann praktisch mit einem Materialeinsatz, der nicht viel größer ist als bei einer einreihigen Anordnung, die doppelte Anzahl von stabförmigen Teilen in einer einzigen Verpackung aufgenommen werden.

Bei verschiedenen Konstruktionen ist es zweckmäßig, wenn der Deckstreifen und der Aufnahmestreifen durch Verkleben oder Prägen lösbar miteinander verbunden sind. Es stehen also eine Vielzahl von Möglichkeiten offen, wie der Deckstreifen und der Aufnahmestreifen miteinander verbunden werden, sichergestellt sein muß nur ein sehr einfaches Lösen. Für den Transport ist also immer eine entsprechend stabile Verpackung geschaffen, welche dann, wenn sie nicht mehr benötigt wird, mit einer einfachen Aktion, eben durch Abreißen oder Ablösen eines Deckstreifens, gesamthaft entfernt werden kann.

Um die Handhabung bzw. die Bedienung dieser Verpackung gerade dann, wenn sie entfernt werden soll, zu erleichtern, wird vorgeschlagen, daß der Deckstreifen an wenigstens einem seiner Enden eine Grifflasche aufweist. Mit einem solchen vorstehenden Bereich ist es einfacher, den Deckstreifen zu erfassen und im Bereich der Verbindungsstellen zum Aufnahmestreifen herauszuziehen, abzureißen bzw. abzulösen.

Mit einem solchen vorstehenden Bereich ist es auch einfacher, den Deckstreifen zu erfassen und aus dem Inneren des als Hohlprofil ausgebildeten Aufnahmestreifens herauszuziehen. In diesem Zusammenhang ist es von besonderem Vorteil, wenn die Grifflasche an wenigstens einem Ende in den als Hohlprofil ausgebildeten Aufnahmestreifen hinein umgebogen ist und zwischen die eingesetzten stabförmigen Teile und die den Aufnahmeöffnungen entgegengesetzte Innenwandung des Aufnahmestreifens eingreift. Damit ist zugleich auch noch eine Transportsicherung des Deckstreifens gegeben, damit dieser nicht unabsichtlich herausgezogen werden kann.

Es besteht die Möglichkeit, daß der Aufnahmestreifen und der Deckstreifen aus dem gleichen oder aus verschiedenem Material gefertigt sind. Je nach Transportweg, je nach Art des Versandes in Mehrfachpackungen bzw. je nach Einsatzgebiet können hier also verschiedene Materialkombinationen zum Einsatz kommen. Dabei ist es gerade je nach Einsatzgebiet auch sinnvoll, wenn Aufnahmestreifen und/oder Deckstreifen aus einer Metallfolie, aus Kunststoff oder aus Karton gefertigt sind.

Weitere erfindungsgemäße Merkmale und besondere Vorteile werden in der nachstehenden Beschreibung anhand der Zeichnungen noch näher erläutert. Es zeigen:
- Fig. 1: eine Schrägsicht einer erfindungsgemäßen Verpackung, wobei gerade die in dieser Verpackung gehaltenen, stabförmigen Teile in einen Magazinierkanal eingeführt werden;
- Fig. 2 und 3: weitere Ausführungsvarianten der Erfindung;
- Fig. 4: eine Schrägsicht einer weiteren Ausführungsform einer erfindungsgemäßen Verpakkung, wobei gerade die in dieser Verpackung gehaltenen, stabförmigen Teile in einen Magazinierkanal eingeführt werden;
- Fig. 5 und Fig. 6: Horizontalschnitte durch die Endbereiche dieser Verpackung.

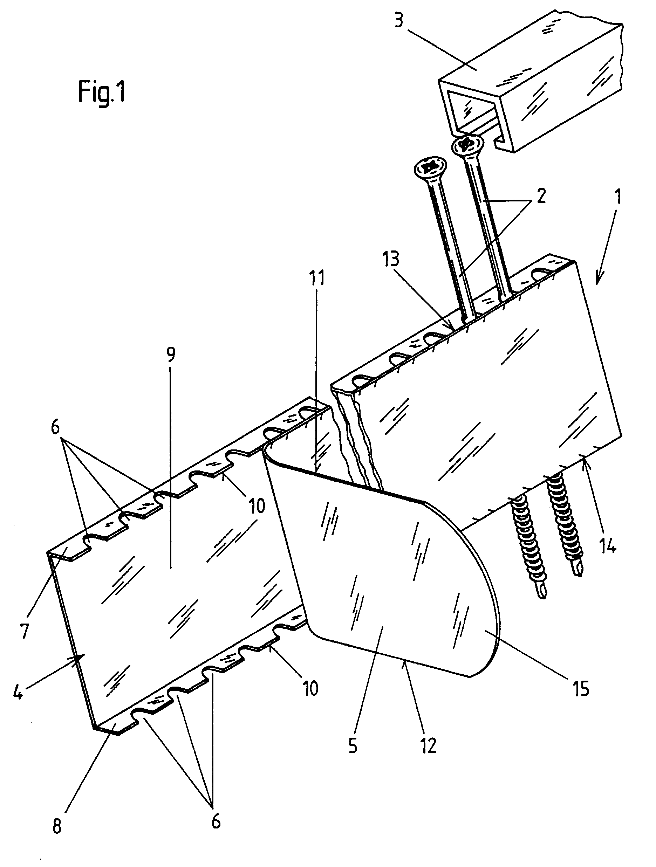

Mit einer Verpackung nach Fig. 1 sollen stabförmige Teile 2, wie hier z.B. lange Schrauben, parallel zueinander und in einer Reihe ausgerichtet für den Transport gehalten werden und in einer solchen Ausrichtung beispielsweise in eine Schiene 3 eines Magazins eingeführt werden können. Die Verpackung ist dabei als Trägerelement 1 ausgebildet, welches aus einem Aufnahmestreifen 4 und einem Deckstreifen 5 besteht. Dabei weist der Aufnahmestreifen 4 eine Vielzahl von Aufnahmeöffnungen 6 auf, um eben die stabförmigen Teile 2 in gleichmäßigem Abstand und parallel zueinander ausgerichtet zu halten.

Der Aufnahmestreifen 4 ist im wesentlichen U-förmig ausgebildet, wobei in den mit Abstand parallel zueinander verlaufenden Stegen 7, 8, welche vom Rückenteil 9 abstehen, die Aufnahmeöffnungen 6 ausgebildet sind. Wie der Zeichnung sehr deutlich entnommen werden kann, sind die Aufnahmeöffnungen 6 zum freien Randbereich 10 der Stege 7, 8 hin erweitert ausgeführt oder zumindest als in Draufsicht U-förmige Öffnungen ausgebildet, so daß also dann, wenn kein Deckstreifen 5 vor diesen Öffnungen 6 anliegt, die hier eingesetzten stabförmigen Teile 2 einfach herausgenommen bzw. in umgekehrter Weise der Aufnahmestreifen 4 in einfacher Weise von der Rückseite der stabförmigen Teile 2 weggezogen werden kann. Der Deckstreifen 5 liegt mit seinen Längsrändern 11 und 12 an den Randbereichen 10 der Stege 7, 8 an und bildet somit einseitig einen Verschluß für die Aufnahmeöffnungen 6. Bei der gezeigten Ausführungsvariante nach Fig. 1 ist der Deckstreifen 5 einstückig mit dem Aufnahmestreifen 5 ausgebildet, wobei direkt im Kantenbereich, also am Übergang zwischen den Stegen 7, 8 und dem Deckstreifen 5 Perforationslinien 13, 14 ausgebildet sind. Es kann also der Deckstreifen 5 in sehr einfacher Weise vom Aufnahmestreifen 4 abgetrennt bzw. abgerissen werden. Dabei muß der Abdeckstreifen 5 lediglich an einem Ende erfaßt werden, so daß dieser über die ganze Länge des Trägerelementes 1 in einem Zug entfernt werden kann. Es ist dann leicht möglich, den rückseitigen Aufnahmestreifen 4 zu entfernen bzw. es ist sogar durch die besondere Formgebung der Aufnahmeöffnungen 6 möglich, daß der Aufnahmestreifen 4 praktisch wegfällt.

Im Rahmen der Erfindung ist es durchaus denkbar, daß anstelle von Perforationslinien entsprechende andere Schwächungslinien vorhanden sind, da einfach eine Möglichkeit zu schaffen ist, den Deckstreifen entsprechend abzureißen bzw. abzutrennen, ohne daß besonderes Werkzeug erforderlich ist. Denkbar wäre es auch, diese Schwächungslinien bzw. Perforationslinien 13, 14 nicht direkt im Kantenbereich, sondern an den Stegen 7 bzw. 8 und/oder an entsprechenden Übergangsbereichen zwischen den Stegen 7, 8 und dem Deckstreifen 5 auszubilden. Bei einer Anordnung dieser Perforationslinien 13, 14 im Bereich der Stege 7, 8 wäre es auch denkbar, kreisrunde Aufnahmeöffnungen 6 vorzusehen, wobei die Perforationslinien 13, 14 dann praktisch durch die Mittelachsen dieser Öffnungen geführt würden. Auch in einem solchen Falle kann der nach dem Abreißen des Deckstreifens 5 verbleibende Aufnahmestreifen 4 sofort und ohne Kraftaufwendung entfernt werden.

Die Aufnahmeöffnungen 6 werden vorteilhaft so ausgebildet, daß sie im Querschnitt oder zumindest in der Abmessung in einer Richtung etwas kleiner sind als der Außendurchmesser bzw. der Gewindedurchmesser der zu haltenden, stabförmigen Teile 2. Dadurch ist gewährleistet, daß sich die stabförmigen Teile 2 in der Verpackung nicht unnötigerweise in deren axialer Richtung verschieben können.

In der Zeichnung ist das Trägerelement als einstückiger Teil dargestellt, welcher umfangsgeschlossen ausgeführt ist. Für eine einfache Fertigung wird eine solche Verpackung aus einem flächigen Material gefertigt, wobei nach der Herstellung der Aufnahmeöffnungen und der Perforationslinien sowie der Vorfertigung der Abbiegekanten zwei einander überlappende Randstreifen miteinander verklebt werden, um dadurch eben dieses im Querschnitt gesehen rechteckige Trägerelement zu schaffen.

Im Rahmen der Erfindung ist es auch möglich, den Rückenteil 9 unterbrochen auszuführen bzw. zum Teil über die ganze Längsrichtung durchgehend überhaupt wegzulassen, so daß dann lediglich noch die Stege 7, 8 bzw. kleine daran anschließende, abgewinkelte Abschnitte bestehen bleiben. Es wäre dann praktisch der Aufnahmestreifen aus zwei Teilen gebildet, welche mit Abstand voneinander angeordnet sind. Wenn dann der Deckstreifen 5 abgezogen wird, fallen die beiden rückwärtigen Teile, nämlich die beiden Abschnitte des Aufnahmestreifens, welche in einem solchen Falle nur aus den Stegen 7 und 8 gebildet sind, nach unten weg. Eine gleiche Lösung wäre ja auch denkbar, wenn der Aufnahmestreifen 4 wie in Fig. 1 dargestellt ausgeführt würde, wobei dann jedoch an jeden Rand 10 der Stege 7 und 8 jeweils schmale Deckstreifen anschließen und somit eben zwei solcher Deckstreifen abgerissen werden müßten. Es wäre aber auch möglich, diese beiden schmalen Deckstreifen 5 über einen entsprechenden Bügel an einem Ende miteinander zu verbinden oder eben an jedem dieser Abschnitte von Deckstreifen 5 ebenso wie beim Deckstreifen 5 nach Fig. 1 eine Grifflasche 15 vorzusehen.

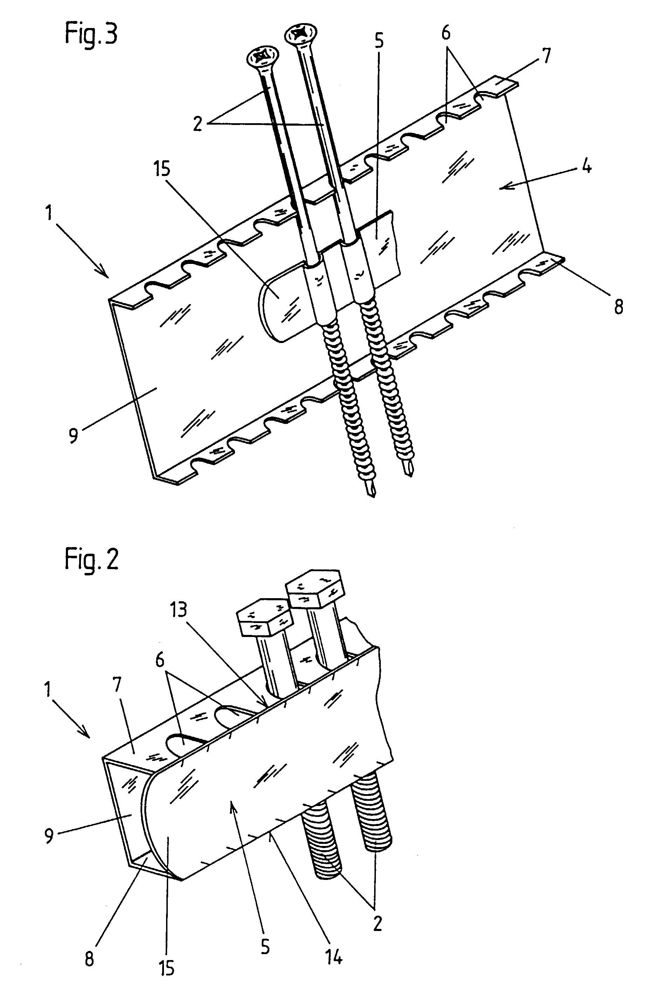

Bei der Ausführung nach Fig. 2 sind die gleichen konstruktiven Maßnahmen und Ausführungen vorgesehen wie in Fig. 1, wobei jedoch die Querschnittsform des Trägerelementes 1 fast quadratisch ausgeführt ist, so daß also die beiden Stege 7 und 8 wesentlich länger ausgeführt sind und der Rückenteil 9 dafür entsprechend schmaler. Eine solche Konstruktion wäre insbesondere dann sinnvoll, wenn relativ schwere stabförmige Teile oder eben stabförmige Teile, welche lediglich Teil eines an sich größeren Konstruktionsteiles sind, verpackt werden sollen. Es ist ja gerade durch die erfindungsgemäßen Maßnahmen möglich, Verpackungsvarianten für verschiedene Konstruktionsteile zu schaffen, die in irgendeiner Weise Schrauben, Bolzen, Nägel, Stifte oder dergleichen aufweisen, welche dann in einer erfindungsgemäßen Verpackung gehalten werden können. Dabei ist es keineswegs so, daß diese Bolzen oder Stifte immer zylindrisch ausgeführt sein müssen. Es ist durchaus möglich, solche Bolzen in anderen Querschnittsformen als stabförmige Teile in einer solchen Verpackung zu halten.

Bei der Ausführung nach Fig. 3 ist der Aufnahmestreifen 4 praktisch wieder gleich ausgebildet wie bei der Ausführung nach Fig. 1, wobei jedoch eine andere Ausbildung und Anordnung des Deckstreifens 5 vorgesehen ist. Der Deckstreifen 5 ist hier an dem, dem Aufnahmestreifen 4 gegenüberliegenden Bereich der stabförmigen Teile 2 diese abdeckend angeordnet, wobei der Deckstreifen 5 im Bereich zwischen den stabförmigen Teilen 2 am Rückenteil 9 des Aufnahmestreifens 4 anliegt und mit diesem ablösbar bzw. abreißbar verbunden ist. Es kann bei einer solchen Ausführung die gleiche Wirkung wie bei den Varianten nach den Fig. 1 und 2 erzielt werden, denn auch hier kann der Deckstreifen 5 durch Erfassen der Grifflasche 15 abgerissen bzw. abgelöst werden, so daß die stabförmigen Teile 2 dann wiederum frei im Aufnahmestreifen 4 liegen, welcher rückwärts weggezogen werden kann bzw. von selbst abfällt. Die Verbindung zwischen Aufnahmestreifen 4 und Deckstreifen 5 kann beispielsweise durch Verkleben oder durch einen Prägevorgang erfolgen, so daß immer wieder ein sehr einfaches Abreißen bzw. Abtrennen möglich wird.

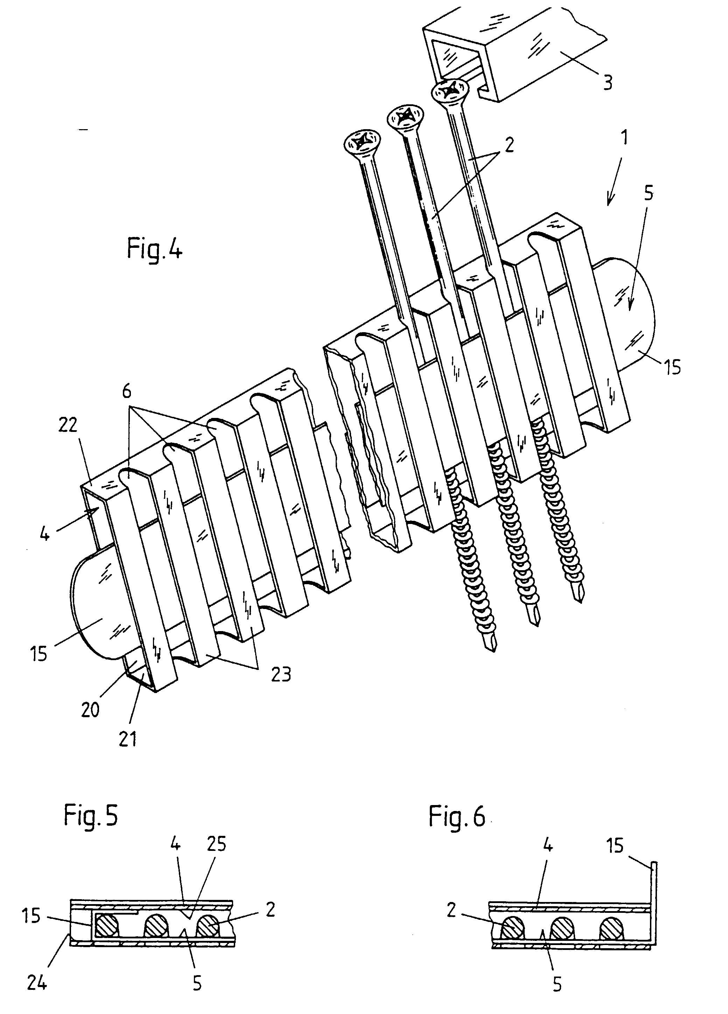

Mit einer Verpackung nach Fig. 4 werden stabförmige Teile 2, wie hier z.B. lange Schrauben, ebenfalls parallel zueinander und in einer Reihe ausgerichtet für den Transport gehalten und können in einer solchen Ausrichtung beispielsweise in eine Schiene 3 eines Magazins eingeführt werden. Die Verpackung ist dabei als Trägerelement 1 ausgebildet, welches aus einem Aufnahmestreifen 4 und einem Deckstreifen 5 besteht. Dabei weist der Aufnahmestreifen 4 eine Vielzahl von Aufnahmeöffnungen 6 auf, um die stabförmigen Teile 2 eben in gleichmäßigem Abstand und parallel zueinander ausgerichtet zu halten.

Der Aufnahmestreifen 4 ist hier als Hohlprofil ausgebildet und besteht beim gezeigten Beispiel aus einem geschlossenen Rückenteil 20, den oberen und unteren Stegen 21 und 22 sowie streifenförmigen Abschnitten 23, welche zwischen den Aufnahmeöffnungen 6 verbleiben. Wenn der Aufnahmestreifen aus einem flächigen Material hergestellt wird, können z.B., wie dies aus dem Schnittbereich in Fig. 4 und auch in den Fig. 5 und 6 ersichtlich ist, die beiden Randbereiche dieses bandförmigen Materials einander überlappend miteinander verbunden, z.B. verklebt werden. Gerade bei der Ausführung des Aufnahmestreifens aus einem flächigen Material ist es natürlich sehr einfach, den Bereich der Aufnahmeöffnungen 6 durch einen Stanzvorgang zu bilden.

Der Deckstreifen 5 wird zum Verschließen der Aufnahmeöffnungen 6 nach dem Einsetzen der stabförmigen Teile 2 in den als Hohlprofil ausgebildeten Aufnahmestreifen 4 hineingeschoben, und zwar in den Bereich zwischen den stabförmigen Teilen 2 und der Innenwandung 24 des Aufnahmestreifens 4. Dadurch sind die Aufnahmeöffnungen 6 in einfacher Weise nach außen hin verschlossen, und die stabförmigen Teile 2 werden sicher gehalten.

Beim gezeigten Beispiel handelt es sich um eine aus flächigem Material gebogene Verpackung. Es wäre auch denkbar, ein an sich gezogenes Hohlprofil herzustellen, wobei dann in einer Außenwandung des Aufnahmestreifens 4 entsprechende Schlitze zu fertigen sind. Zweckmäßig ist die in der Zeichnung dargestellte Querschnittsform der Verpackung, d.h., wenn der Aufnahmestreifen 4 im Querschnitt rechteckig ausgebildet ist. Für ganz spezielle stabförmige Teile, z.B. für im Durchmesser relativ dicke Teile 2, ist auch eine quadratische Querschnittsform denkbar. Natürlich sind auch andere Querschnittsformen, z.B. eine trapezförmige Ausbildung des Aufnahmestreifens, möglich. Im Rahmen der Erfindung ist es aber auch denkbar, den Aufnahmestreifen im Querschnitt kreis-, ellipsen- oder mehreckförmig auszubilden, wobei der Deckstreifen 5 dann in gleicher Weise wie bei der Ausbildung nach Fig. 4 aus dünnem, flächigem Material gefertigt ist. Bei einer solchen Querschnittsgestaltung des Aufnahmestreifens 4 wäre es aber auch möglich, einen Deckstreifen einzusetzen, welcher einen den Restquerschnitt zwischen den einzusetzenden stabförmigen Teilen 2 und der Innenwandung auf der Seite der Aufnahmeöffnungen annähernd füllenden Querschnitt aufweist. Es ist dann wiederum eine ordnungsgemäße Abstützung der eingesetzten stabförmigen Teile 2 gegen die Innenwandung des Aufnahmestreifens 4 gewährleistet.

Wie aus Fig. 4 ersichtlich ist, wird der Deckstreifen 5 zweckmäßigerweise in einer kleineren Breite ausgeführt als die in Längserstreckung der einzusetzenden stabförmigen Teile 2 gemessene Länge der Aufnahmeöffnungen 6. Dadurch ist nicht nur ein einfaches Einführen des Deckstreifens 5, sondern auch ein leichteres Herausziehen desselben möglich.

Die Zeichnungsfiguren zeigen, daß die Aufnahmeöffnungen 6 zum freien Randbereich hin erweitert oder als in Draufsicht U-förmige Öffnungen ausgebildet sind. Gerade dann, wenn eine gewisse Erweiterung zum Rand hin vorgesehen wird, ist es wesentlich leichter, die Verpakkung nach dem Herausziehen des Deckstreifens 5 wegzukippen bzw. wegzuschwenken. Die Aufnahmeöffnungen 6 sind zudem im Querschnitt etwas kleiner als der Außendurchmesser bzw. der Gewindedurchmesser der zu haltenden, stabförmigen Teile 2, um zu gewährleisten, daß sich die stabförmigen Teile 2 in der Verpackung nicht unnötigerweise in deren axialer Richtung verschieben können.

Der Deckstreifen 5 weist auch bei dieser Ausführung an wenigstens einem seiner Enden eine Grifflasche 15 auf. Beim gezeigten Beispiel ist an beiden Enden des Deckstreifens eine Grifflasche 15 vorgesehen. Bei einer Variante bzw. als Ausbildung an einem Ende der Verpackung kann vorgesehen werden, daß die Grifflasche 15 in den als Hohlprofil ausgebildeten Aufnahmestreifen 4 hinein umgebogen ist und zwischen die eingesetzten stabförmigen Teile 2 und die den Aufnahmeöffnungen 6 entgegengesetzte Innenwandung 25 des Aufnahmestreifens 4 eingreift. Es ist dadurch, wie dies gerade der Fig. 5 gut entnommen werden kann, eine Transportsicherung gegeben. Auf der anderen Seite, also am anderen Ende des Aufnahmestreifens 4 kann die Grifflasche 15 einfach umgebogen werden, damit sie in der übergeordneten, größeren Verpackungsschachtel nicht hindernd im Wege ist. Gerade durch die umgebogene Anordnung steht die Grifflasche 15 relativ weit vor und kann daher gut erfaßt werden, um den Deckstreifen 5 bei Bedarf herauszuziehen.

Bei einer besonderen Ausführungsform, die in den Zeichnungen nicht dargestellt ist, könnten an zwei einander gegenüberliegenden Bereichen des Aufnahmestreifens 4 Aufnahmeöffnungen 6 vorgesehen werden, wobei der Aufnahmestreifen dann natürlich in Richtung quer zur Längserstreckung desselben entsprechend breiter ausgeführt sein müßte. Es wäre dann ein Befüllen des Aufnahmestreifens 4 von zwei einander gegenüberliegenden Seiten her möglich. Eine solche Ausbildung könnte praktisch auch erreicht werden, wenn zwei Aufnahmestreifen 4 Rücken an Rücken miteinander verbunden würden. Dies würde aber bedeuten, daß der gleiche Materialanteil erforderlich wäre, ob nun die doppelte Aufnahmekapazität vorhanden ist oder nicht. Eine solche Ausführung wäre dann sinnvoll, wenn keine entsprechende Zwischenwand zwischen den von gegenüberliegenden Seiten einzusetzenden stabförmigen Teilen gebildet sein müßte. Es ist jedoch dann bei einer solchen Ausführung auf jeden Fall erforderlich, zwei Deckstreifen vorzusehen, also jeweils zwischen den eingesetzten stabförmigen Teilen 2 und der zugeordneten Innenwandung des Aufnahmestreifens 4. Es könnten dabei zwei einzelne Deckstreifen 5 vorgesehen werden oder aber zwei Abschnitte von Deckstreifen, welche an ihrem einen Ende über einen Steg miteinander verbunden sind. Eine solche Ausgestaltung ist aber wiederum nur dann sinnvoll, wenn mit diesen von einem einzigen Aufnahmestreifen gehaltenen zwei Reihen von stabförmigen Teilen gleichzeitig zwei parallel zueinander liegende Magazinkanäle befüllt werden sollen. Ansonsten ist zum Nacheinander-Befüllen jeweils ein Wenden der Verpackung um 180° erforderlich, worauf dann jeweils der nächstfolgende Deckstreifen 5 herausgezogen werden kann.

Anstelle eines einschiebbaren Deckstreifens 5 kann bei einer Konstruktion des Aufnahmestreifens 4 gemäß der Fig. 4 auch ein Klebband vorgesehen werden, welches an den zwischen den Aufnahmeöffnungen 6 verbleibenden streifenförmigen Stegen 23 ablösbar aufgeklebt ist. Es ist auch auf diese Weise eine unverlierbare Halterung der stabförmigen Teile, also inbesondere von Schrauben, in einem entsprechenden Trägerelement möglich. Auch bei einer solchen Ausbildung kann das Trägerelement rasch entfernt werden, indem einfach der Klebstreifen abgezogen wird, worauf der Aufnahmestreifen an der gegenüberliegenden Seite der stabförmigen Teile weggezogen werden kann.

Die Form der Aufnahmestreifen 4 und der Deckstreifen 5 bzw. mehrteiliger solcher Aufnahmestreifen oder Deckstreifen kann auf verschiedenste Art und Weise gestaltet werden. Es ist lediglich immer notwendig, daß die stabförmigen Teile parallel zueinander und in einer Reihe ausgerichtet gehalten werden können, und daß der Deckstreifen durch Abreißen, Abtrennen oder Ablösen vom Aufnahmestreifen entfernt werden kann. Je nach Einsatzgebiet können der Aufnahmestreifen und der Deckstreifen aus dem gleichen oder aus verschiedenem Material gefertigt sein. Zweckmäßige Materialien sind dabei Metallfolien, Kunststoff oder Karton. Gerade im Baubereich ist der Einsatz von Karton, Metallfolien, aber auch Kunststoff sinnvoll, da diese gemeinsam mit auf dem Bau anfallenden, ähnlichen Materialien einer Wiederverwertung zugeführt werden können.

## Patentansprüche

1. Verpackung für stabförmige Teile, z.B. Schrauben, Bolzen, Nägel, Stifte oder dergleichen, in Form eines streifenförmigen Trägerelementes, in welchem die Teile parallel zueinander und in einer Reihe ausgerichtet gehalten werden können, wobei das Trägerelement (1) aus einem Aufnahmestreifen (4) mit einer Vielzahl von Aufnahmeöffnungen (6), Einbuchtungen, Schlitzen, Noppen oder dergleichen zur parallel zueinander ausgerichteten Halterung der stabförmigen Teile (2) und aus einem Deckstreifen (5) besteht, welcher den dem Aufnahmestreifen (4) gegenüberliegenden Bereich der stabförmigen Teile auf einem Teil ihrer Länge abdeckt, dadurch gekennzeichnet, daß der Deckstreifen (5) mit dem Aufnahmestreifen (4) in einer Weise verbunden ist, welche das gesamthafte Abreißen, Abtrennen bzw. Ablösen des Deckstreifens (5) vom Aufnahmestreifen ermöglicht.

2. Verpackung nach Anspruch 1, dadurch gekennzeichnet, daß der Aufnahmestreifen (4) im wesentlichen U-förmig ausgebildet ist, wobei in den mit Abstand parallel zueinander verlaufenden, von einem Rückenteil (9) abstehenden Stegen (7, 8) Aufnahmeöffnungen (6) bzw. Einbuchtungen ausgebildet sind.

3. Verpackung nach Anspruch oder 2, dadurch gekennzeichnet, daß die Aufnahmeöffnungen (6) bzw. Einbuchtungen zum freien Randbereich (10) der Stege (7, 8) hin erweitert oder als in Draufsicht U-förmige Öffnungen ausgebildet sind.

4. Verpackung nach Anspruch 1 und/oder einem der Ansprüche 2 oder 3, dadurch gekennzeichnet, daß der Deckstreifen (5) mit seinen Längsrändern (11, 12) an den freien Randbereich (10) der Stege (7, 8) anschließt und den einseitigen Verschluß der Aufnahmeöffnungen (6) bzw. Einbuchtungen bildet.

5. Verpackung nach wenigstens einem der Ansprüche 1 bis 4, dadurch gekennzeichnet, daß der Deckstreifen (5) einstückig mit dem Aufnahmestreifen (4) ausgebildet ist, wobei an den Stegen (7, 8) und/oder an den Übergangsbereichen zwischen den Stegen (7, 8) und dem Deckstreifen (5) zum Abreißen des Deckstreifens (5) geeignete Schwächungslinien bzw. Perforationslinien (13, 14) ausgebildet sind.

6. Verpackung nach Anspruch 5, dadurch gekennzeichnet, daß direkt im Kantenbereich, also am Übergang zwischen Stegen (7, 8) und Deckstreifen (5) eine Perforationslinie (13, 14) ausgebildet ist.

7. Verpackung nach Anspruch 1 oder einem der Ansprüche 2 bis 6, dadurch gekennzeichnet, daß die Aufnahmeöffnungen (6) bzw. Einbuchtungen im Querschnitt etwas kleiner sind als der Außendurchmesser bzw. der Gewindedurchmesser der zu haltenden, stabförmigen Teile (2).

8. Verpackung nach Anspruch 1 und/oder einem der Ansprüche 2 oder 3, dadurch gekennzeichnet, daß der Deckstreifen (5) an dem dem Aufnahmestreifen (4) gegenüberliegenden Bereich der stabförmigen Teile (2) diese abdeckend übergreift, im Bereich zwischen den stabförmigen Teilen (2) am Aufnahmestreifen (4) anliegt und mit diesem ablösbar bzw. abreißbar verbunden ist.

9. Verpackung nach Anspruch 1, dadurch gekennzeichnet, daß das Trägerelement (1) aus einem als Hohlprofil gebildeten Aufnahmestreifen (4) mit einer Vielzahl von quer zu dessen Längserstreckung verlaufenden, zur Aufnahmeseite hin offenen Aufnahmeöffnungen (6), Schlitzen oder dergleichen zur parallel zueinander ausgerichteten Halterung der stabförmigen Teile (2) und aus einem Deckstreifen (5) besteht, welcher den nach außen hin in den Aufnahmeöffnungen (6) freiliegenden Bereich der stabförmigen Teile (2) abdeckt.

10. Verpackung nach Anspruch 9, dadurch gekennzeichnet, daß der Deckstreifen (5) zwischen den stabförmigen Teilen (2) und der Innenwandung (24) desjenigen Abschnittes des als Hohlprofil ausgebildeten Aufnahmestreifens (4), welcher mit den Aufnahmeöffnungen (6), Schlitzen oder dergleichen ausgestattet ist, verschiebbar einsetzbar und herausziehbar ist.

11. Verpackung nach Anspruch 9, dadurch gekennzeichnet, daß der Deckstreifen (5) auf den zwischen den Aufnahmeöffnungen (6) verbleibenden streifenförmigen Stegen (23) des als Hohlprofil ausgebildeten Aufnahmestreifens (4) ablösbar aufgeklebt ist.

12. Verpackung nach Anspruch 9, dadurch gekennzeichnet, daß der als Hohlprofil ausgebildete Aufnahmestreifen (4) im Querschnitt quadratisch, rechteckig oder trapezförmig ausgebildet und der Deckstreifen (5) aus dünnem, flächigem Material gefertigt ist.

13. Verpackung nach Anspruch 9, dadurch gekennzeichnet, daß der als Hohlprofil ausgebildete Aufnahmestreifen (4) im Querschnitt kreis-, ellipsen- oder mehreckförmig ausgebildet und der Deckstreifen (5) aus dünnem, flächigem Material gefertigt ist oder einen den Restquerschnitt zwischen den eingesetzten stabförmigen Teilen (2) und der Innenwandung (24) auf der Seite der Aufnahmeöffnungen (6) annähernd füllenden Querschnitt aufweist.

14. Verpackung nach einem der Ansprüche 9 bis 13, dadurch gekennzeichnet, daß die Breite des Deckstreifens (5) kleiner ist als die in Längserstreckung der einzusetzenden stabförmigen Teile (2) gemessene Länge der Aufnahmeöffnungen (6).

15. Verpackung nach Anspruch 9, dadurch gekennzeichnet, daß der Aufnahmestreifen (4) an zwei einander gegenüberliegenden Bereichen Aufnahmeöffnungen (6) aufweist, wobei dann für diesen Aufnahmestreifen zwei Deckstreifen (5) oder zwei Abschnitte von Deckstreifen (5) vorgesehen sind, welche an ihrem einen Ende gegebenenfalls über einen Steg miteinander verbunden sind.

16. Verpackung nach einem der Ansprüche 1 oder 8 bis 11, dadurch gekennzeichnet, daß der Deckstreifen (5) und der Aufnahmestreifen (4) durch Verkleben oder Prägen lösbar miteinander verbunden sind.

17. Verpackung nach Anspruch 1 und/oder einem der Ansprüche 2 bis 15, dadurch gekennzeichnet, daß der Deckstreifen (5) an wenigstens einem seiner Enden eine Grifflasche (15) aufweist.

18. Verpackung nach den Ansprüchen 9 und 17, dadurch gekennzeichnet, daß die Grifflasche (15) an wenigstens einem Ende in den als Hohlprofil ausgebildeten Aufnahmestreifen (4) hinein umgebogen ist und zwischen die eingesetzten stabförmigen Teile (2) und die den Aufnahmeöffnungen (6) entgegengesetzte Innenwandung (25) des Aufnahmestreifens (4) eingreift.

19. Verpackung nach einem der vorhergehenden Ansprüche, dadurch gekennzeichnet, daß der Aufnahmestreifen (4) und der Deckstreifen (5) aus dem gleichen oder aus verschiedenem Material gefertigt sind.

20. Verpackung nach Anspruch 19, dadurch gekennzeichnet, daß Aufnahmestreifen (4) und/ oder Deckstreifen (5) aus einer Metallfolie, aus Kunststoff oder aus Karton gefertigt sind.

## Claims

1. A pack for rod-like members, for example screws, bolts, nails, pins or the like, in the form of a strip-like carrier element in which the members can be retained parallel to one another and aligned in a row, wherein the carrier element (1) comprises a receiving strip (4) with a plurality of receiving apertures (6), recesses, slots, projections or the like for retaining the rod-like members (2) aligned parallel to one another, and a covering strip (5) which over a part of its length covers the area of the rod-like members opposite the receiving strip (4), characterised in that the covering strip (5) is connected to the receiving strip (4) in a manner which enables the covering strip (5) to be completely torn away, separated or detached from the receiving strip.

2. A pack according to Claim 1, characterised in that the receiving strip (4) is substantially U-shaped, wherein receiving apertures (6) or recesses are formed in webs (7,8) which extend spaced apart from and parallel to one another and which project from a back part (9).

3. A pack according to Claim 1 or 2, characterised in that the receiving apertures (6) or recesses are formed widened towards the free edge zone (10) of the webs (7,8) or as apertures which are U-shaped in plan view.

4. A pack according to Claim 1 and/or either Claim 2 or Claim 3, characterised in that with its longitudinal edges (11,12) the covering strip (5) adjoins the free edge zone (10) of the webs (7,8) and forms on one side the closure for the receiving apertures (6) or recesses.

5. A pack according to at least one of Claims 1 to 4, characterised in that the covering strip (5) is formed in one piece with the receiving strip (4), wherein suitable weakening lines or perforated lines (13,14) for tearing away the covering strip (5) are formed in the webs (7,8) and/or at the transition zones between the webs (7,8) and the covering strip (5).

6. A pack according to Claim 5, characterised in that a perforated line (13,14) is formed in the edge zone, i.e. at the transition between the webs (7,8) and the covering strip (5).

7. A pack according to Claim 1 and any one of Claims 2 to 6, characterised in that in cross-section the receiving apertures (6) or recesses are slightly smaller than the outer diameter or thread diameter of the rod-like members (2) to be retained.

8. A pack according to Claim 1 and/or either Claim 2 or Claim 3, characterised in that in the region of the rod-like members (2) opposite the receiving strip (4) the covering strip (5) overlaps said members so as to cover them, it adjoins the receiving strip (4) in the region between the rod-like members (2) and is connected to the receiving strip so that it can be detached or torn therefrom.

9. A pack according to Claim 1, characterised in that the carrier element (1) comprises a receiving strip (4) in the form of a hollow profile with a plurality of receiving apertures (6), slots or the like, which extend transversely to its longitudinal extension, which are open towards the receiving side and which serve for the mutually parallel aligned retention of the rod-like members (2), and a covering strip (5) which covers the exposed area of the rod-like members (2) extending from the outside into the receiving apertures (6).

10. A pack according to Claim 9, characterised in that the covering strip (5) can be inserted and withdrawn slidably between the rod-like members (2) and the inner wall (24) of that portion of the receiving strip (4) which is in the form of a hollow profile and which is provided with the receiving apertures (6), slots or the like.

11. A pack according to Claim 9, characterised in that the covering strip (5) is detachably adhered to the strip-like webs (23) of the receiving strip (4) in the form of a hollow profile left between the receiving apertures (6).

12. A pack according to Claim 9, characterised in that the receiving strip (4) in the form of a hollow profile is of square, rectangular or trapezium shape in cross-section and the covering strip (5) is made from thin, planar material.

13. A pack according to Claim 9, characterised in that the receiving strip (4) in the form of a hollow profile is of circular, elliptical or polygonal shape in cross-section and the covering strip (5) is made from thin, planar material or is of a cross-section which approximately fills the residual cross-section between the inserted rod-like members (2) and the inner wall (24) on the side of the receiving apertures (6).

14. A pack according to any one of Claims 9 to 13, characterised in that the width of the covering strip (5) is smaller than the length of the receiving apertures (6) measured in longitudinal extension of the rod-like members (2) to be inserted.

15. A pack according to Claim 9, characterised in that the receiving strip (4) has receiving apertures (6) in two mutually opposing zones, wherein for these receiving strips (4) two covering strips (5) or two portions of covering strips (5) are provided which at one end are optionally joined together via a web.

16. A pack according to any one of Claims 1 or 8 to 11, characterised in that the covering strip (5) and the receiving strip (4) are releasably joined together by gluing or embossing.

17. A pack according to Claim 1 and/or any one of Claims 2 to 15, characterised in that at at least one of its ends the covering strip (5) has a grip tab (15).

18. A pack according to Claims 9 and 17, characterised in that at at least one end the grip tab (15) is bent over into the receiving strip (4) in the form of a hollow profile and engages between the inserted rod-like members (2) and the inner wall (25) of the receiving strip (4) opposite the receiving apertures (6).

19. A pack according to any one of the preceding Claims, characterised in that the receiving strip (4) and the covering strip (5) are made from the same material of from different material.

20. A pack according to Claim 19, characterised in that the receiving strip (4) and/or the covering strip (5) are made from a metal foil, from plastics material or from cardboard.

## Revendications

1. Emballage pour des pièces en forme de tige, par exemple des vis, des goujons, des clous, des pointes ou pièces semblables, sous la forme d'un élément porteur en forme de bande, dans lequel l'élément porteur (1) se compose d'une bande de réception ou de logement (4) ayant un grand nombre d'ouvertures (6), d'échancrures, de rainures, de boutons ou parties semblables pour fixer parallèlement l'une à l'autre les pièces en forme de tige (2) et d'une bande de recouvrement (5), qui masque la zone opposée à la bande de réception (4) des pièces en forme de tige sur une partie de leur longueur,
caractérisé en ce que
la bande de recouvrement (5) est reliée à la bande de réception (4) d'une manière, qui permet le détachement, la séparation ou le décollement de la bande de recouvrement (5) de la bande de réception.

2. Emballage selon la revendication 1,
caractérisé en ce que
la bande de réception (4) est réalisée essentiellement en forme de U, tandis que sont réalisées dans les traverses (7, 8) se développant parallèlement l'une à l'autre à une certaine distance et faisant saillie d'une partie arrière (9) des ouvertures de logement (6) ou échancrures.

3. Emballage selon les revendications 1 ou 2,
caractérisé en ce que
les ouvertures de logement (6) ou échancrures sont réalisées éloignées vers la zone de bord libre (10) des traverses (7, 8) ou comme des ouvertures en forme de U dans une vue de dessus.

4. Emballage selon la revendication 1 et/ou une des revendications 2 ou 3,
caractérisé en ce que
la bande de recouvrement (5) se raccorde par ses bords longitudinaux (11, 12) à la zone de bord libre (10) des traverses (7, 8) et constitue la fermeture d'un côté des ouvertures de logement (6) ou échancrures.

5. Emballage selon au moins une des revendications 1 à 4,
caractérisé en ce que
la bande de recouvrement (5) est réalisée en une pièce avec la bande de réception (4), tandis que sur les traverses (7, 8) et/ou sur les zones de transition entre les traverses (7, 8) et la bande de recouvrement (5) sont réalisées des lignes d'affaiblissement ou lignes de perforation (13, 14) aptes au détachement de la bande de recouvrement (5).

6. Emballage selon la revendication 5,
caractérisé en ce que
directement dans la zone de bord, donc à la transition entre traverses (7, 8) et bande de recouvrement (5) est réalisée une ligne de perforation (13, 14).

7. Emballage selon la revendication 1 ou une des revendications 2 à 6,
caractérisé en ce que
les ouvertures de logement (6) ou échancrures sont en section transversale un peu plus petites que le diamètre extérieur ou le diamètre nominal des pièces en forme de tige à maintenir.

8. Emballage selon la revendication 1 et/ou une des revendications 2 ou 3,
caractérisé en ce que
la bande de recouvrement (5) chevauche sur la zone opposée à la bande de réception (4) des pièces en forme de tige (2) en recouvrant celles-ci, adhère à la bande de réception (4) dans la zone comprise entre les pièces en forme de tige (2) et est reliée avec détachement possible ou arrachement à cette bande de réception (4).

9. Emballage selon la revendication 1,
caractérisé en ce que
l'élément porteur (1) se compose d'une bande de réception (4) formée en profilé creux avec un grand nombre d'ouvertures de logement (6), de rainures ou parties équivalentes ouvertes du côté réception et se développant perpendiculairement à son développement longitudinal pour fixer parallèlement l'une à l'autre les pièces en forme de tiges (2) et d'une bande de recouvrement (5), qui recouvre la zone des pièces en forme de tige (2) se trouvant libre vers l'extérieur dans les ouvertures de logement (6).

10. Emballage selon la revendication 9,
caractérisé en ce que
la bande de recouvrement (5) peut être mise en place et retirée par ajustement entre les pièces en forme de tige (2) et la paroi intérieure (24) du segment de la bande de réception (4) réalisé en profilé creux, qui est constitué d'ouvertures de logement (6), de rainures ou parties équivalentes.

11. Emballage selon la revendication 9,
caractérisé en ce que
la bande de recouvrement (5) est collée mais détachable sur les entretoises (23) en forme de bandes demeurant entre les ouvertures de logement (6) de la bande de réception (4) réalisée en profilé creux.

12. Emballage selon la revendication 9,
caractérisé en ce que
la bande de réception (4) formée en profilé creux est réalisée en section transversale carrée, rectangulaire ou trapézoïdale et la bande de recouvrement (5) est produite en un matériau mince et plat.

13. Emballage selon la revendication 9,
caractérisé en ce que
la bande de réception (4) formée en profilé creux est réalisée en section transversale de forme circulaire, elliptique ou polygonale et la bande de recouvrement (5) est fabriquée en un matériau mince, plat ou comporte une section transversale remplissant approximativement la section transversale résiduelle entre les pièces en forme de tige (2) mises en place et la paroi intérieure (24) du côté des ouvertures de logement (6).

14. Emballage selon une des revendications 9 à 13,
caractérisé en ce que
la largeur de la bande de recouvrement (5) est plus petite que la longueur des ouvertures de logement (6) mesurée en étendue longitudinale des pièces en forme de tige (2) à mettre en place.

15. Emballage selon la revendication 9,
caractérisé en ce que
la bande de réception (4) comporte deux zones d'ouverture de logement (6) opposées l'une à l'autre, tandis qu'alors pour cette bande de réception sont prévues deux bandes de recouvrement (5) ou deux tronçons de bandes de recouvrement (5), qui sont reliés entre eux à une de leurs extrémités éventuellement par une entretoise.

16. Emballage selon une des revendications 1 ou 8 à 10,
caractérisé en ce que
la bande de recouvrement (5) et la bande de logement (6) sont reliées entre elles de manière détachable par collage ou estampage.

17. Emballage selon la revendication 1 et/ou une des revendications 2 à 15,
caractérisé en ce que
la bande de recouvrement (5) comporte sur au moins une de ses extrémités une attache de prise (15).

18. Emballage selon les revendications 9 et 17,
caractérisé en ce que
l'attache de prise (15) est repliée au moins à une extrémité sur la partie intérieure de la bande de réception (4) réalisée en tant que profilé creux et elle s'engage entre les pièces en forme de tige (2) mises en place et la paroi interne (25) opposée aux ouvertures de logement (6).

19. Emballage selon une des revendications précédentes,
caractérisé en ce que
la bande de réception (4) et la bande de recouvrement (5) sont produites en un même matériau ou en un matériau différent.

20. Emballage selon la revendication 19,
caractérisé en ce que
la bande de réception (4) et/ou la bande de recouvrement (5) sont fabriquées à partir d'une feuille de métal, de matière plastique ou de carton.
